# EUROPEAN PATENT SPECIFICATION

(11) **EP 3 956 154 B1**
(45) Date of publication and mention of the grant of the patent: **28.05.2025**
(21) Application number: 20792255.0
(22) Date of filing: 14.04.2020
(51) Int. Cl.: B44C 5/04, B44C 1/28, B44C 1/175, C08J 7/04, C08J 5/18, C09D 7/40, C09D 7/65, B32B 37/24, B44C 1/10, B44F 1/02, C08K 3/36, C09D 7/61

(54) **FILM**
FILM
FILM

(30) Priority: 16.04.2019 JP 2019077734
(43) Date of publication of application: 23.02.2022
(73) Proprietor: 3M Innovative Properties Company, Saint Paul, Minnesota 55133-3427 (US)
(72) Inventor: SAITO, Koji, Tokyo 141--8684 (JP); SUGIYAMA, Naota, Tokyo 141--8684 (JP); KONDO, Shinsuke, Tokyo 141--8684 (JP)
(74) Representative: Vossius & Partner Patentanwälte Rechtsanwälte mbB
(86) International application number: PCT/IB2020/053523
(87) International publication number: WO 2020/212851

(56) References cited:
- JP-A- H0 655 900
- JP-A- H0 655 900
- JP-A- H07 137 221
- JP-A- H07 137 221
- US-A1- 2011 171 429
- US-A1- 2011 171 429
- US-A1- 2016 236 447
- US-A1- 2016 236 447
- US-A1- 2019 085 506
- US-A1- 2019 085 506

## Description

### Technical Field

The present disclosure relates to a film which can be used for the purposes of decoration and the like.

### Background Art

Decorative films have been used for the purposes of decoration of the interior and exterior of buildings, vehicles, and the like. For example, decorative films in which a polyvinyl chloride film having a printed layer and a transparent polyvinyl chloride film are laminated and which have been subjected to emboss finishing are known. Various material textures, such as woodgrain, metallic, textile, and marble textures, can be expressed by using various combinations of lamination and emboss finishing.

For example, Patent Document 1 (JP 2011-255552 A) describes "an embossed decorative sheet having a surface that has been subjected to emboss processing, the embossed decorative sheet having a surface-protecting layer formed from a curable resin containing synthetic resin beads on a surface side of the decorative sheet, an average depth/height of the emboss processing is from 15 to 50 µm, and the synthetic resin beads being synthetic resin beads having an average particle size of 8 to 20 µm".

Patent Document 2 (WO 2008/129667) describes "a decorative sheet provided with a protective layer mainly composed of a transparent resin component provided on the surface of a print layer of a print sheet, wherein the protective layer comprises a first protective layer provided on the print layer of the print sheet and a second protective layer containing transparent or semi-transparent spherical particles and provided on given areas of the first protective layer, and the luster of the salient surface of the first protective layer is lower than the luster of the surface of the second protective layer".

Patent Document 3 (US 2019/0085506 A1) discloses a decorative material comprising a first gloss-adjusting layer and a second gloss-adjusting layer partially provided on the first gloss-adjusting layer and having gloss different from that of the first gloss-adjusting layer, wherein a matting agent is added to the gloss-adjusting layer with lower gloss.

### Summary of Invention

### Technical Problem

In recent years, a film which can realize surfaces such as a dried wood surface, a matt coated surface, and the like, has a more glossy appearance, and can be used for the purposes of decoration has been required. Methods by which a decorative film having a surface appearance with low glossiness is formed by coating with a resin containing microparticles or beads as a surface layer have been known. These decorative films can be used for the interior and exterior of buildings, the interior of vehicles, furniture, covering for articles, and the like.

However, since a surface exhibiting a low gloss appearance has the light diffusing property or the irregular light reflecting property, it is difficult to express a rugged texture on such a low gloss surface. Even though, for example, the low gloss surface is subjected to emboss processing, it is difficult to distinguish a contrast of texture formed by the emboss processing due to glossiness of the entire surface, resulting in a low texture visibility. This is more remarkable as a glossiness of a low gloss surface is low.

The present disclosure provides a film having a low gloss appearance and a visible texture.

### Solution to Problem

The invention is defined in the independent claim. The dependent claims are directed to preferred embodiments.

### Advantageous Effects of Invention

The film of the present disclosure has a low gloss appearance and a visible texture, such that the film has high designability. Therefore, the film of the present disclosure can be suitably used for the interior and exterior of buildings, vehicles, and the like.

Note that the above descriptions should not be construed to be a disclosure of all of the embodiments and benefits of the present disclosure.

### Brief Description of Drawings

FIG. 1 is a schematic cross-sectional view of a film of an embodiment.
FIG. 2 are photographs showing external appearances of films of Example 1, Comparative Example 1, Comparative Example 2, and Comparative Example 3 in order from the left.

### Description of Embodiments

Hereinafter, representative embodiments of the present invention will be described in more detail for the purpose of illustration, but the present invention is not limited to these embodiments but only by the appended claims.

In the present disclosure, "transparent" refers to a condition where the total light transmittance in the wavelength range of 400 to 700 nm of a material or article is approximately 85% or greater. "Translucent" refers to a condition where the total light transmittance in the wavelength range of 400 to 700 nm of a material or article is approximately 20% or greater but approximately less than 85%. "Opaque" refers to a condition where the total light transmittance in the wavelength range of 400 to 700 nm of a material or article is approximately less than 20%. The total light transmittance can be determined in accordance with JIS K 7361-1:1997 (ISO 13468-1:1996).

In an embodiment, a surface layer of a film includes a low gloss layer including a binder containing a resin and resin beads having an average particle size of 4 µm to 20 µm, and a printed pattern partially covering the low gloss layer. A region of the low gloss layer not covered with the printed pattern exhibits a matte appearance with 1.5 GU or less at 60 degrees of a surface glossiness, and a surface glossiness of a region of the printed pattern is higher than the surface glossiness of the region not covered with the printed pattern. The low gloss layer including the resin beads having the average particle size of the above range imparts a low glossiness appearance to a film. The printed pattern partially covering the low gloss layer is used, such that a change in a glossiness generated by cooperating a region not covered with the low gloss layer and the printed pattern with each other is recognized as a texture (ruggedness) by an observer. In this way, a visible texture can be formed even on a film with a low gloss surface.

In an embodiment, nanosilica particles are included in the low gloss layer, such that the film can be stretchable. The film of the embodiment is a film to be stretchable so as to conform to a shape of an article to which the film is adhered. In some embodiments, the film can maintain a low gloss appearance after stretching.

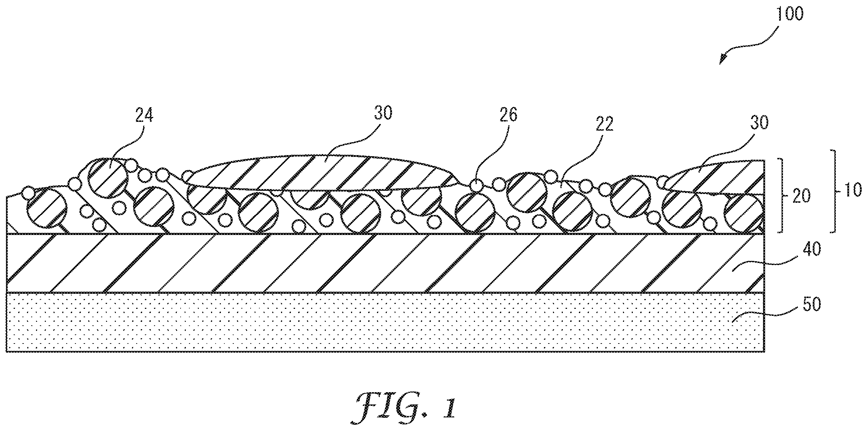

A schematic cross-sectional view of a film of an embodiment is illustrated in FIG. 1. A film 100 of FIG. 1 includes a surface layer 10, and a substrate layer 40 and an adhesion layer 50 which are optional components. The film 100 may also be formed from only the surface layer 10; that is, the surface layer 10 itself may be a film. The surface layer 10 includes a low gloss layer 20 including a binder 22 containing a resin and resin beads 24 having an average particle size of 4 µm to 20 µm, and a printed pattern 30 partially covering the low gloss layer 20 including optional nanosilica particles 26.

Various resins can be used as a resin contained in the binder. In an embodiment, the binder contains a urethane resin. Various publicly known urethane resins can be used as the urethane resin. The urethane resin can be obtained by drying or curing a urethane resin composition. The urethane resin composition may be an aqueous or non-aqueous system. It is advantageous that the urethane resin is a cured product of a two-part urethane resin composition. The two-part urethane resin composition is typically a non-aqueous urethane resin composition. By using the two-part urethane resin composition, other components of the low gloss layer at the time of forming the low gloss layer, for example, resin beads, in particular, urethane resin beads, nanosilica particles, or the like form a chemical bond with the urethane resin, and as a result, falling of these particles from the low gloss layer and bleeding-out of the components can be prevented or suppressed.

The two-part urethane resin composition typically contains a polyol as a main agent and a multi-functional isocyanate as a curing agent and, as necessary, a catalyst and/or a solvent.

As the polyol, polyester polyols, such as polycaprolactone diol and polycaprolactone triol; polycarbonate polyols, such as cyclohexanedimethanol carbonate and 1,6-hexanediol carbonate; and combinations of these can be used. These polyols can impart transparency, weather resistance, hardness, chemical resistance and the like to the low gloss layer. In particular, polycarbonate polyols can form a low gloss layer having high transparency and chemical resistance. From the viewpoint of imparting stretchability to the low gloss layer without forming an excessive crosslinking structure, polyol is preferably diol, polyester diol, and polycarbonate diol, and particularly polycarbonate diol can be used advantageously.

The OH value of the polyol may be typically approximately 10 mg/KOH or greater, approximately 20 mg/KOH or greater, or approximately 30 mg/KOH or greater, but approximately 150 mg/KOH or less, approximately 130 mg/KOH or less, or approximately 120 mg/KOH or less.

Examples of the multi-functional isocyanate include aliphatic polyisocyanates, alicyclic polyisocyanates, aromatic polyisocyanates, and aromatic aliphatic polyisocyanates, and multimers (dimers, trimers, and the like), biuret-modified products, allophanate-modified products, polyol-modified products, oxadiazine trione-modified products, and carbodiimide-modified products of these polyisocyanates. From the viewpoint of imparting stretchability to the low gloss layer without forming the excessive crosslinking structure, polyfunctional isocyanate is preferably diisocyanate. Examples of such diisocyanate include aliphatic diisocyanates, such as tetramethylene diisocyanate and hexamethylene diisocyanate (HDI); alicyclic diisocyanates, such as isophorone diisocyanate, trans,trans- and trans,cis- and cis,cis- dicyclohexylmethane-4,4'-diisocyanate and mixtures of these (hydrogenated MDI); aromatic diisocyanates, such as 2,4-tolylene diisocyanate and 2,6-tolylene diisocyanate, and isomeric mixtures of these tolylene diisocyanate (TDI), 4,4'-diphenylmethane diisocyanate, 2,4'-diphenylmethane diisocyanate, 2,2'-diphenylmethane diisocyanate, and isomeric mixtures of these diphenylmethane diisocyanate (MDI); aromatic-aliphatic diisocyanates, such as 1,3- or 1,4-xylylene diisocyanate or mixtures thereof (XDI), and 1,3- or 1,4-tetramethylxylylene diisocyanate or mixtures thereof (TMXDI).

As the equivalent weight ratio of the polyol to the polyisocyanate, typically, the equivalent weight of the polyisocyanate may be approximately 0.6 equivalents or greater, approximately 0.7 equivalents or greater, but approximately 2 equivalents or less, or approximately 1.2 equivalents or less, per 1 equivalent of the polyol.

As the catalyst, catalysts that are typically used in formation of urethane resins, such as di-n-butyltin dilaurate, zinc naphthenate, zinc octenoate, and triethylenediamine, can be used. The content of the catalyst is typically approximately 0.005 parts by mass or greater, or approximately 0.01 parts by mass or greater, but approximately 0.5 parts by mass or less, or approximately 0.2 parts by mass or less, per 100 parts by mass of the two-part urethane resin composition.

The binder may further contain a cellulose ester. The binder contains cellulose ester, such that, since a viscosity of the binder increases in a drying process and a surface liquidity decreases, a binder precursor including resin beads can be uniformly coated. Examples of the cellulose ester include cellulose acetate propionate and cellulose acetate butyrate.

A number average molecular weight of the cellulose ester may be generally approximately 12000 or greater, approximately 16000 or greater, or approximately 20000 or greater, but approximately 110000 or less, approximately 100000 or less, or approximately 90000 or less, in consideration of solubility in a solvent. The number average molecular weight of the cellulose ester is determined by gel permeation chromatography (GPC) using a standard polystyrene.

The glass transition temperature (Tg) of the cellulose ester may be typically approximately 85°C or higher, approximately 96°C or higher, or approximately 101°C or higher, but approximately 190°C or lower, approximately 180°C or lower, or approximately 160°C or lower, taking the capability of maintaining the shape at the used temperature into consideration. The glass transition temperature of the cellulose ester is determined by using a differential scanning calorimeter (DSC).

In some embodiments, approximately 5 parts by mass or greater, approximately 10 parts by mass or greater, or approximately 15 parts by mass or greater, but approximately 35 parts by mass or less, approximately 30 parts by mass or less, or approximately 25 parts by mass or less, per 100 parts by mass of the binder, of the cellulose ester may be contained in the binder. When a content of the cellulose ester is in the above range, the resin beads are uniformly dispersed by the low gloss layer and a uniform low gloss appearance can be imparted to the film.

The low gloss layer includes resin beads. Various resin beads can be used for the resin beads. The resin beads form a fine ruggedness due to the presence of the beads on a film surface and a low gloss structure can thus be formed on the film surface.

In one embodiment, the resin beads are urethane resin beads. Since the urethane resin beads have good affinity with the binder containing a resin, particularly, with the binder containing a urethane resin, adhesion of the urethane resin beads to the binder is high. As a result, shedding of the urethane resin beads from the binder can be suppressed in the case where the film is stretched or deformed. As the urethane resin beads, crosslinked polyurethane microparticles obtained via suspension polymerization, seed polymerization, emulsion polymerization, or the like can be used. The urethane resin beads are excellent in flexibility, toughness, and abrasion resistance, and these characteristics can be imparted to the low gloss layer.

The average particle size of the resin beads is preferably approximately 4 µm or greater and approximately 20 µm or less. In some embodiments, the average particle size of the resin beads is preferably approximately 6 µm or greater, or approximately 10 µm or greater, but approximately 10 µm or less or approximately 15 µm or less. In a case where the average particle size of the resin beads is less than approximately 4 µm, whitening due to scattering of light easily occurs on a surface of a film. In a case where the average particle size of the resin beads exceeds approximately 20 µm, gloss easily occurs, and achieving low gloss becomes difficult. The resin beads having the average particle size in the above range can impart low gloss with low brightness, that is, low whiteness on the low gloss layer by adequately scattering light incident on the low gloss layer. The average particle size of the resin beads is a 50% cumulative volume particle size measured by using a laser diffraction type particle size distribution measuring apparatus.

In some embodiments, the resin beads may be contained in the low gloss layer in an amount of approximately 70 parts by mass or greater, approximately 80 parts by mass or greater, or approximately 100 parts by mass or greater, but approximately 240 parts by mass or less, approximately 230 parts by mass or less, or approximately 200 parts by mass or less per 100 parts by mass of the binder. In a case where the content of the resin beads is less than approximately 70 parts by mass, it is difficult to obtain low gloss, and in a case where the content of the resin beads exceeds approximately 240 parts by mass, whitening easily occurs. The content of the resin beads is in the above range, such that the low gloss layer exhibiting low gloss at a wide range of visual angle, for example, 20 degrees to 85 degrees, can be obtained.

The low gloss layer may further include nanosilica particles. In a case where the nanosilica particles exist in the binder, change in low gloss which easily occurs in a case of stretching the film with only the resin beads included in the film can be suppressed, and whitening of the film can be effectively prevented.

In the case of nanosilica particles, for example, a silica sol obtained using liquid glass (sodium silicate solution) as a starting material can be used. The surface of the nanosilica particles may be modified using a surface treatment agent, such as silane, alcohol, amine, carboxylic acid, sulfonic acid, phosphonic acid, and titanate.

In some embodiments, the average particle diameter of the nanosilica particles is approximately 10 nm or greater, approximately 20 nm or greater, or approximately 30 nm or greater, but approximately 100 nm or less, approximately 75 nm or less, or approximately 45 nm or less. By using the nanosilica particles of such a fine size, it is possible to highly disperse the nanosilica particles in the low gloss layer. Even when the film is stretched, because the fine nanosilica particles are dispersed and remain in the stretched part, loss of low gloss can be suppressed and whitening of the film can be effectively prevented. There is also a possibility that the nanosilica particles which exist adjacent to the resin beads function as a certain type of physical crosslinking point between the resin beads, particularly the urethane resin beads, and the binder. Falling of the resin beads when stretching the film can be suppressed by the existence of the nanosilica particles which can function as such a physical crosslinking point, and whitening of the film can be effectively prevented. The average particle size of the nanosilica particles is a value calculated from a specific surface area measured using a BET method.

In some embodiments, the nanosilica particles may be contained in the low gloss layer in an amount of approximately 5 parts by mass or greater, approximately 10 parts by mass or greater, or approximately 20 parts by mass or greater, but approximately 120 parts by mass or less, approximately 110 parts by mass or less, or approximately 100 parts by mass or less per 100 parts by mass of the binder. The content of the nanosilica particles is in the above range, such that glossiness of the low gloss layer can be further decreased. The content of the nanosilica particles in the above range, such that low gloss appearance can be maintained even at the time of stretching the film, for example, increase in brightness, that is, whitening, can be prevented or suppressed at the time of 150% stretching. The content of the nanosilica particles in the above range, such that excellent abrasion resistance can be imparted to the low gloss layer.

The low gloss layer may further include a silicone-modified polymer having a functional group capable of reacting with isocyanates or a hydroxy group. When finger sebum is attached on the surface with low gloss, the trace thereof is easily visually observed. By including the silicone-modified polymer having a functional group capable of reacting with isocyanates or a hydroxy group in the low gloss layer, fingerprint resistance of the low gloss layer can be increased. The silicone-modified polymer can impart abrasion resistance, which results from slipping due to lowering of a coefficient of friction of the low gloss layer, to the low gloss layer. The isocyanates or the hydroxy group in the silicone-modified polymer reacts with a hydroxy group or an isocyanate group in the urethane resin or the urethane resin beads contained in the binder, and thus the silicone-modified polymer may bond to the urethane resin or the urethane resin beads. In this embodiment, bleeding out from the low gloss layer of the silicone-modified polymer can be prevented or suppressed.

As the silicone-modified polymer having a functional group capable of reacting with isocyanates or a hydroxy group, a polyether-modified silicone, polyester-modified silicone, aralkyl-modified silicone, acryl-modified silicone, and silicone-modified polymer, such as a silicone-modified polyacrylate and urethane-modified silicone, can be used. Examples of the functional group capable of reacting with isocyanates or a hydroxy group of the silicone-modified polymer include a hydroxyl group, an amino group having active hydrogen, an isocyanate group, an epoxy group, and an acid anhydride group. From the perspective of achieving especially excellent fingerprint resistance, the silicone-modified polymer is advantageously a silicone-modified polyacrylate. The silicone-modified polymer preferably has a hydroxy group or an isocyanate group having high reactivity with an isocyanate or hydroxy group, and particularly preferably has a hydroxy group.

In some embodiments, the silicone-modified polymer having a functional group capable of reacting with isocyanates or a hydroxy group, for example, silicone-modified polyacrylate, may be included in the low gloss layer in an amount of approximately 0.1 part by mass or greater, approximately 0.5 parts by mass or greater, or approximately 1.0 part by mass or greater, but approximately 15 parts by mass or less, approximately 12 parts by mass or less, or approximately 10 parts by mass or less per 100 parts by mass of the binder. The content of the silicone-modified polymer in the above range, such that fingerprint resistance and/or abrasion resistance of the low gloss layer can be further increased.

The low gloss layer may contain additives such as a filler other than the resin beads and the nanosilica particles, an ultraviolet absorbent, a light stabilizer, a thermal stabilizer, a dispersant, a plasticizer, a flow improver, a leveling agent, and the like as other optional components. In an embodiment, a content of each or total of the respective additives can be determined by the range in which a required property for the low gloss layer is not impaired.

In an embodiment, the low gloss layer contains a flake-like filler having an average particle size of approximately greater than 30 µm and approximately less than 1000 µm, in the range in which the low gloss appearance is not impaired. Examples of the flake-like filler include expansible graphite, an aluminum foil powder pigment, a glass flake powder pigment, a resin film foil powder pigment, and the like. The average particle size of the flake-like filler is a 50% cumulative volume particle size measured by using a laser diffraction type particle size distribution measuring apparatus. A thickness of the flake-like filler may be 0.5 µm to 30 µm. An aspect ratio of the flake-like filler may be 1.0 to 2000.

Composition containing a binder precursor containing a resin composition, resin beads having an average particle size of 4 µm to 20 µm, and optional nanosilica particles. In an embodiment, the resin composition is a urethane resin composition. In an embodiment, the resin beads are urethane resin beads.

The binder precursor may contain a cellulose ester described above related to the binder in addition to the resin composition. The cellulose ester can impart quick-drying properties, dry feeling when touched by a finger, flowability, leveling properties, or the like to the surface coating composition. The cellulose ester can be used for adjusting viscosity of the surface coating composition.

The surface coating composition may further contain a silicone-modified polymer having a functional group capable of reacting with isocyanates or a hydroxy group described above. The isocyanate or hydroxy group of the silicone-modified polymer can be reacted with the hydroxy group or isocyanate group of the urethane resin composition or urethane resin beads to bond the silicone-modified polymer with the urethane resin or the urethane resin beads. Therefore, bleeding-out of the silicone-modified polymer from the low gloss layer can be prevented or suppressed. When the silicone-modified polymer is used, from the perspective of reactivity, it is advantageous that the urethane resin composition be a two-part urethane resin composition.

A content of the surface coating composition is as described in the low gloss layer. Contents of the cellulose ester, the resin beads, the nanosilica particles, and the silicone-modified polymer having a functional group capable of reacting with isocyanates or a hydroxy group are applied by replacing 100 parts by mass of the binder precursor with 100 parts by mass of the binder as a standard.

To enhance workability, coatability, and the like, the surface coating composition may further contain a solvent, such as aromatic hydrocarbons of ketones, such as methyl ethyl ketone, methyl isobutyl ketone, and acetyl acetone, toluenes, xylenes, and the like; alcohols, such as ethanol and isopropyl alcohol; esters, such as ethyl acetate and butyl acetate; and ethers, such as tetrahydrofuran, propylene glycol monomethyl ether, propylene glycol monomethyl ether acetate (1-methoxy-2-propyl acetate), and dipropylene glycol monomethyl ether acetate. The content of the solvent in the surface coating composition is typically approximately 20 parts by mass or greater, or approximately 30 parts by mass or greater, but approximately 60 parts by mass or less, or approximately 50 parts by mass or less, per 100 parts by mass of the binder precursor.

The viscosity of the surface coating composition is typically approximately 20 mPa·s or greater, approximately 50 mPa·s or greater, or approximately 100 mPa·s or greater, but approximately 1000 mPa·s or less, approximately 800 mPa·s or less, or approximately 600 mPa·s or less. The viscosity of the surface coating composition is measured using a B-type viscometer at a rotational speed of 60 rpm by selecting an appropriate spindle.

The surface coating composition is coated on the substrate by using nano coating, bar coating, blade coating, doctor coating, roll coating, cast coating, and the like and is heated at approximately 80°C to 150°C and dried and/or cured as necessary, thereby forming the low gloss layer.

A thickness of the low gloss layer can be, for example, approximately 3 µm or greater, approximately 5 µm or greater, or approximately 10 µm or greater, approximately 50 µm or less, approximately 30 µm or less, or approximately 20 µm or less. The thickness of the low gloss layer in the present disclosure means a thickness of the thickest portion, that is, the maximum thickness.

In some embodiments, the low gloss layer is transparent or semi-transparent. In these embodiments, the total light transmittance in a wavelength range of 400 to 700 nm of the low gloss layer may be approximately 80% or greater, approximately 85% or greater, or approximately 90% or greater. In these embodiments, decoration such as printing on a substrate and the like can be visible through the low gloss layer.

The printed pattern is used for providing a gloss region on the low gloss layer and imparting a visible texture to the film by a difference in glossiness of the low gloss layer. The printed pattern can be formed on the low gloss layer by using print technologies such as ink jet printing, gravure printing, electrostatic printing, screen printing, offset printing, and the like.

Examples of a printing ink can include a solvent ink, an aqueous ink, or a UV-curable ink. The printing ink may be transparent, semi-transparent, or opaque, and may be colorless or colored.

A thickness of the printed pattern may be various, in a case where a solvent ink is generally used, the thickness of the printed pattern may be approximately 1 µm or greater or approximately 2 µm or greater, but approximately 10 µm or less or approximately 5 µm or less. In a case where a UV-curable ink is used, the thickness of the printed pattern can be approximately 1 µm or greater or approximately 5 µm or greater, but approximately 50 µm or less or approximately 30 µm or less. The thickness of the printed pattern in the present disclosure means a thickness of the thickest portion, that is, the maximum thickness.

The printed pattern may be continuous or discontinuous. The printed pattern may be disposed so as to correspond to the entire surface of the film and may be disposed so as to correspond to a portion or a plurality of portions of the surface of the film. Examples of the printed pattern include wood, stone, logo, picture, character, symbol, and the like.

In an embodiment, the printed pattern is an ink jet printed pattern. The ink jet printing makes on demand manufacturing in a short period of time possible.

In an embodiment, the printing ink is a UV-curable ink and is advantageously printed by ink jet printing. The UV-curable ink can form a printed pattern having a smooth surface with a difference in height, and makes a difference in the surface glossiness between a region not covered with the printed pattern of the low gloss layer and a region of the printed pattern large, such that the texture may be clearly visible.

As the UV-curable ink, any of radical polymerization type and cationic polymerization type can be used. As the UV-curable ink, a non-solvent ink including a polymerizable monomer and/or a polymerizable oligomer, a polymerization initiator, and other optional components (light stabilizer, polymerization inhibitor, UV absorbent, antifoaming agent, stain-proofing agent) can be advantageously used. As the UV-curable ink, an aqueous ink or a solvent ink can be used.

In an embodiment, the UV-curable ink is a radical polymerization type acrylic ink. A printed pattern formed by using the acrylic ink is excellent in transparency, hardness, weather resistance, and the like. For example, the acrylic ink is advantageously used in a case where a decorative film is used as an interior material.

A viscosity of the UV-curable ink can be approximately 5 mPa·s or greater or approximately 15 mPa·s or greater, but approximately 60 mPa·s or less or approximately 50 mPa·s or less at 25°C, and at the time of ejecting the ink, the viscosity of the UV-curable ink can be, for example, approximately 1 mPa·s or greater or approximately 5 mPa·s or greater, but approximately 20 mPa·s or less or approximately 15 mPa·s or less at 45°C. The viscosity of the UV-curable ink is in the above range, such that ink fluidity at the time of ejecting ink droplets can be secured and a shape of the ink droplets at the time of landing ink droplets can be maintained. Therefore, the printed pattern having a high difference in height can be formed.

The UV-curable ink is ink-jet printed on the low gloss layer and cured by irradiating ultraviolet, such that the printed pattern can be formed. The UV-curable ink is printed so that at least a portion of the low gloss layer is covered. The thickness of the printed pattern may be large by repeatedly printing the UV-curable ink.

The film may further include a substrate layer as a substrate. The substrate layer may be stretchable. As the substrate layer, a resin layer formed of at least one resin selected from the group consisting of polyvinyl chloride, polyurethane, polyethylene, polypropylene, a vinyl chloride-vinyl acetate resin, an acrylic resin, a cellulose resin, and a fluororesin can be used.

The substrate layer may be colored or colorless. The substrate layer may be opaque, semi-transparent or transparent. The substrate layer may have a substantially smooth surface and may have a structured surface which can be formed by surface processing such as emboss processing. An appearance or a shape of the substrate layer is as described above and various decorative characteristics can be imparted to the film.

In an embodiment, the substrate layer includes a transparent polyvinyl chloride resin layer and a colored polyvinyl chloride resin layer. In the film of this embodiment, the colored polyvinyl chloride resin layer is supported or protected by the transparent polyvinyl chloride resin layer, and thus durability can be imparted to the decorative characteristics of the film. For example, the film of this embodiment can be suitably used for adhesion to interior materials or exterior materials of buildings or vehicles.

A thickness of the substrate layer can be, for example, approximately 25 µm or greater, approximately 50 µm or greater, or approximately 80 µm or greater, but approximately 5 mm or less, approximately 1 mm or less, or approximately 0.5 mm or less.

In some embodiments, a tensile stretching rate of the substrate layer is approximately 10% or greater, approximately 20% or greater, or approximately 30% or greater, but approximately 400% or less, approximately 350% or less, or approximately 300% or less. A sample having a width of 25 mm and a length of 150 mm is prepared and the tensile stretching rate of the substrate layer is a value calculated by [Chuck distance when broken (mm) - Chuck distance before stretching (mm) (= 100 mm)]/Chuck distance before stretching (mm) (= 100 mm) x 100(%) when the sample is stretched until it is broken at a temperature of 20°C, a tensile speed of 300 mm/min, and a chuck distance of 100 mm) with a tensile tester.

The substrate layer may have an adhesion layer opposite to the surface layer. Generally used adhesives such as solvent-type, emulsion-type, pressure-sensitive type, heat-sensitive type, and heat-curable or ultraviolet-curable type adhesives, including acrylics, polyolefins, polyurethanes, polyesters, rubbers, and the like can be used as the adhesive layer. The thickness of the adhesive layer may be typically approximately 5 µm or greater, approximately 10 µm or greater, or approximately 20 µm or greater, but approximately 100 µm or less, approximately 80 µm or less, or approximately 50 µm or less.

The surface of the adhesive layer may be provided with a liner. Examples of the liner include papers; plastic materials, such as polyethylene, polypropylene, polyester, and cellulose acetate; and papers coated with such plastic materials. These liners may have a surface that has been subjected to release treatment, such as silicone treatment. The thickness of the liner is typically approximately 5 µm or greater, approximately 15 µm or greater, or approximately 25 µm or greater, but approximately 500 µm or less, approximately 300 µm or less, or approximately 250 µm or less.

In an embodiment, the surface glossiness of the region not covered with the printed pattern of the low gloss layer is approximately 1.5 GU or less when a measuring angle is 60 degrees and exhibits a matte appearance. In some embodiments, the surface glossiness of the region not covered with the printed pattern of the low gloss layer is approximately 0.7 GU or less, approximately 0.5 GU or less, or approximately 0.3 GU or less at 60 degrees.

In an embodiment, the surface glossiness of the region of the printed pattern is higher than the surface glossiness of the region not covered with the printed pattern of the low gloss layer. In some embodiments, the surface glossiness of the region of the printed pattern is approximately 1.9 GU or greater, approximately 4 GU or greater, approximately 7 GU or greater, or approximately 10 GU or greater at 60 degrees.

In an embodiment, a ratio of the surface glossiness of the region of the printed pattern to the surface glossiness of the region not covered with the printed pattern of the low gloss layer is approximately 5 or greater, approximately 10 or greater, or approximately 15 or greater when the measuring angle is 60 degrees.

In an embodiment, the surface glossiness of the region not covered with the printed pattern of the low gloss layer is approximately 0.2 GU or less at 20 degrees, approximately 0.7 GU or less at 60 degrees, or approximately 5.0 GU or less at 85 degrees. In some embodiments, the surface glossiness of the region not covered with the printed pattern of the low gloss layer is approximately 0.2 GU or less at 20 degrees, approximately 0.5 GU or less at 60 degrees, or approximately 4.5 GU or less at 85 degrees, but approximately 0.1 GU or less at 20 degrees, approximately 0.3 GU or less at 60 degrees, or approximately 4.0 GU or less at 85 degrees. By combining the surface glossiness of the region not covered with the printed pattern of the low gloss layer within the above range, reflection of light incident on the film at various angles is suppressed and decoration of the film can be recognized from the wide visual angle.

In some embodiments, a lightness L* of the region not covered with the printed pattern of the low gloss layer is approximately 23 or less, approximately 22.5 or less, or approximately 22.0 or less when measurement is performed under a light source of D65/10 degrees, regular reflection processing SCI, and UV reflection of 0% by using a spectral colorimeter.

In some embodiments, when a lightness of the region not covered with the printed pattern of the low gloss layer before stretching is set as L*₁, a lightness after 150% stretching is set as L*₂, and a lightness difference is set as ΔL* = L*₂ - L*₁, the lightness difference ΔL* is approximately 3 or less, approximately 2.5 or less, or approximately 2.0 or less. In this embodiment, whitening of the film when the film is stretched can be suppressed. Therefore, when the film is applied to the surface by bending or stretching, the decorative characteristics of the film can be maintained at the bent portion or stretched portion.

The use of the film of the present disclosure is not particularly limited. For example, the film of the present disclosure can be used as interior materials such as walls, stairs, ceilings, pillars, and partitions, or exterior materials such as outer walls, of buildings, such as buildings, apartments, or houses. In addition, the film can be used as an interior material or an exterior material of various vehicles such as a railroad vehicle, a ship, a plane, an automobile including two wheels or four wheels. Furthermore, the stretchable film can be also used as covering materials for various articles, such as traffic signs, signboards, furniture, and electrical appliances.

### Examples

In the following examples, specific embodiments of the present disclosure will be exemplified, but the present invention is not limited thereto. All "parts" and "percent" are based on mass unless otherwise specified. The numerical values essentially include errors derived from the measurement principles and measuring devices. The numerical values are generally indicated by significant figures that have been rounded.

Materials and reagents used in the present examples are shown in Table 1.

### [Table 1]

**Table 1**

| Name or abbreviation | Description | Supplier |
|---|---|---|
| Art pearl CE-800T | Urethane resin beads, average particle diameter: 6 µm | Negami Chemical Industrial Co., Ltd. (Nomi-shi, Ishikawa, Japan) |
| MIBK ST L | Nano silica particles, average particle size: 40 to 50 nm, 30 mass% methyl isobutyl ketone (MIBK) dispersion liquid | Nissan Chemical Industries, Ltd. (Chiyoda-ku, Tokyo, Japan) |
| T5652 | Polycarbonate diol, OH value: 51 to 61 mgKOH/g, viscosity: 7000 to 16000 mPa·s (50°C) | Asahi Kasei Corporation (Chiyoda-ku, Tokyo, Japan) |
| CAB-381-20 | Cellulose acetate butyrate | Eastman Chemical Company (Kingsport, Tennessee, United States) |
| SILCLEAN 3700 | Hydroxy group-containing silicone-modified polymer | BYK Japan KK (Shinjuku-ku, Tokyo, Japan) |
| D110N | Xylylene diisocyanate | Mitsui Chemicals, Inc. (Minato-ku, Tokyo, Japan) |
| 1-Methoxy-2-propyl acetate | Solvent | Sigma-Aldrich Co. LLC (Saint Louis, Missouri, United States) |
| Transparent resin substrate 1 | 0.08 mm-thick transparent polyvinyl chloride film, polyvinyl chloride/ester plasticizer/organic stabilizer (acrylic resin, zinc stearate, and the like) = 72/16/12 (mass ratio) | 3M Japan Limited (Shinagawa-ku, Tokyo, Japan) |
| Colored resin substrate 1 | 0.08 mm-thick black polyvinyl chloride film, polyvinyl chloride/ester plasticizer/organic stabilizer, pigment, or the like (acrylic resin, zinc stearate, and the like) = 72/16/12 (mass ratio) | 3M Japan Limited (Shinagawa-ku, Tokyo, Japan) |

### Preparation of low gloss layer coating composition

15.0 g of Art pearl CE-800T, 8.4 g of T5652, 15.0 of MIBK ST L, 2.1 g of CAB-381-20, 2.52 g of D110N, 1.2 g of SILCLEAN 3700 were mixed. 59.5 g of 1-methoxy-2-propyl acetate was added to the mixture, 32.51 mass% solid was prepared, and then the solid was stirred for 3.5 minutes by using a self-revolution type centrifugal stirrer THINKY AR-250 (THINKY CORPORATION, Kasumigaseki 3-chome, Chiyoda-ku, Tokyo, Japan), thereby obtaining the low gloss layer coating composition.

### Formation of low gloss layer

The transparent resin substrate 1 is coated with the low gloss layer coating composition with a gap of 40 µm by using a knife coater, and the transparent resin substrate 1 was left in an oven at a temperature of 65°C for 1.5 minutes to remove the solvent from the coating layer and then was left in an oven at a temperature of 120°C for 5 minutes to perform heat-curing, thereby forming the low gloss layer having a thickness after drying of approximately 12 µm.

### Lamination and emboss processing

The colored resin substrate 1 was laminated on the film having the low gloss layer formed on the substrate layer and the laminated film was pressed by a stain emboss roll (uniform matt) or an ash pattern emboss roll (wood) under a line speed of 7 m/min, a nip pressure of 0.2 MPa, and a temperature of 60°C by a heat processing roll.

### Ink jet printing

Printing is performed on the low gloss layer of the film emboss processed under the conditions described in Table 2.

### [Table 2]

**Table 2**

| | |
|---|---|
| Printer | UJF-3042FX (Mimaki Engineering Co., Ltd., Tokushima-shi, Japan) |
| UV-curable ink jet ink | CMYKW Ink: LUS-200 (Mimaki Engineering Co., Ltd., Tokushima-shi, Japan) |
| | Transparent ink: LH-100 Clear (Mimaki Engineering Co., Ltd., Tokushima-shi, Japan) |
| Printing conditions | 720 x 600 dpi, 16 pass, single direction printing, UV level high Layout CMYKW ink: 100%, transparent ink: 100% |
| Ink L/M/S Drop mode | 3/2/1 |
| Number of printed layers | 1 |
| Printed image | Wood texture pattern (wood is exhibited at 0 to 100% gray scale) |
| | CMYKW bar (each color at 100% laydown) |
| | Transparent ink bar (gray scale at 100% laydown) |
| Remarks | The printed image is printed by any one of the transparent ink or the CMYKW ink. |

### Example 1, Comparative Examples 1 to 3, Reference Example 1, and Reference Examples 1a to 1e

The films of Example 1, Comparative Examples 1 to 3, Reference Example 1, and Reference Examples 1a to 1e were prepared. The types of low gloss layer and ink jet printed pattern, the presence or absence thereof, and the type of emboss processing were described in Table 3. In Reference Examples 1 to 1e, the entire surface of the low gloss layer is covered by printing.

### [Table 3]

**Table 3**

| | Low gloss layer | Emboss processing | Ink jet printing |
|---|---|---|---|
| Example 1 | Yes | Stain | Wood texture pattern printing (transparent ink) |
| Comparative Example 1 | Yes | Ash pattern | None |
| Comparative Example 2 | None | Ash pattern | None |
| Comparative Example 3 | None | Stain | Wood texture pattern printing (transparent ink) |
| Reference Example 1 | Yes | Stain | Transparent ink bar (transparent ink 100%) entire surface printing |
| Reference Example 1a | Yes | Stain | CMYKW bar (white 100%) entire surface printing |
| Reference Example 1b | Yes | Stain | CMYKW bar (black 100%) entire surface printing |
| Reference Example 1c | Yes | Stain | CMYKW bar (yellow 100%) entire surface printing |
| Reference Example 1d | Yes | Stain | CMYKW bar (magenta 100%) entire surface printing |
| Reference Example 1e | Yes | Stain | CMYKW bar (cyan 100%) entire surface printing |

### Surface glossiness

The surface glossiness of the low gloss layers of the films of Example 1, Comparative Examples 1 to 3, Reference Example 1, and Reference Examples 1a to 1e were measured at the measuring degrees of 20 degrees, 60 degrees, and 85 degrees by using a portable type glossmeter BYK Gardner micro-tri-gross (BYK Japan KK, Shinjuku-ku, Tokyo, Japan). In a case where the surface glossiness is 1.5 GU or less at 60 degrees, it can be evaluated that the practical low glossiness conditions are satisfied. In addition, in a case where the surface glossiness satisfies three conditions of 0.2 GU or less at the measuring angle of 20 degrees, 0.7 GU or less at the measuring angle of 60 degrees, and 5.0 GU or less at the measuring angle of 85 degrees, it can be evaluated that very good low gloss surface appearance is exhibited.

### Texture visibility

Texture visibilities of the surface layers of the films in Example 1 and Comparative Examples 1 to 3 were visually observed.

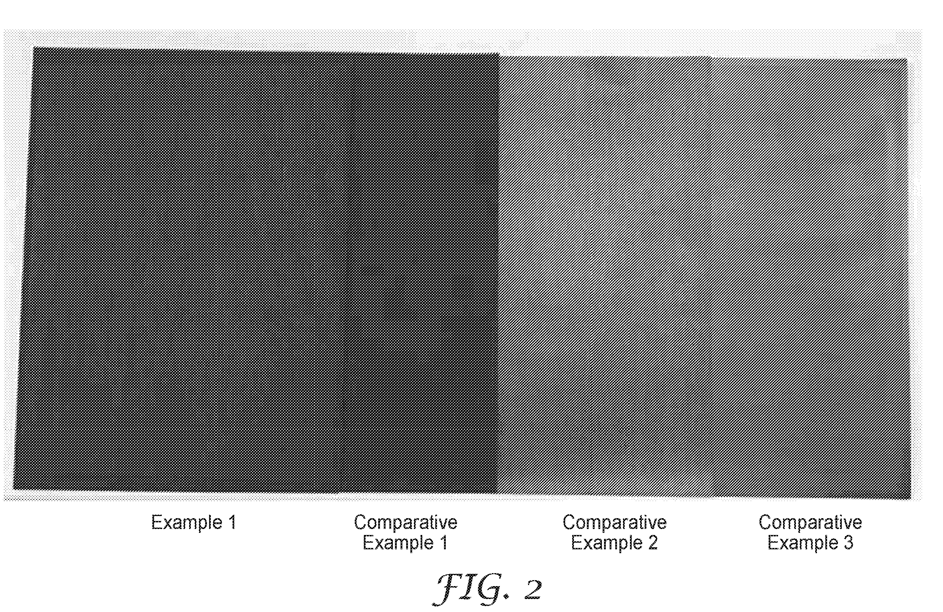

The evaluation results of the films in Example 1 and Comparative Examples 1 to 3 are shown in Table 4. In addition, FIG. 2 are photographs showing respective external appearances of the films of Example 1, Comparative Example 1, Comparative Example 2, and Comparative Example 3 in order from the left.

### [Table 4]

**Table 4**

| | Surface glossiness | | | Texture Visibility |
|---|---|---|---|---|
| | 20 Degree | 60 Degree | 85 Degree | |
| Example 1 | 0.0 | 0.9 | 3.2 | Visible |
| Comparative Example 1 | 0.0 | 0.2 | 3.1 | Non-visible |
| Comparative Example 2 | 0.6 | 7.8 | 22.5 | Visible |
| Comparative Example 3 | 0.7 | 7.8 | 13. | Slightly visible |
| Reference Example 1 | 0.3 | 3.4 | 7.3 | - |
| Reference Example 1a | 0.8 | 3.7 | 4.8 | - |
| Reference Example 1b | 0.3 | 3.4 | 5.6 | - |
| Reference Example 1c | 0.1 | 1.9 | 4.9 | - |
| Reference Example 1d | 0.3 | 4.2 | 7.0 | - |
| Reference Example 1e | 0.4 | 4.8 | 9.1 | - |

### Examples 1a to 1e

The film was prepared with the same procedures as in Example 1 except that the ink is changed from the transparent ink to white (W) ink, black (K) ink, yellow (Y) ink, magenta (M) ink, or cyan (C) ink among the conditions of Table 2. The evaluation results of the films in Example 1a to 1e are shown in Table 5.

### [Table 5]

**Table 5**

| | Ink | Surface glossiness | | | Texture Visibility |
|---|---|---|---|---|---|
| | | 20 Degree | 60 Degree | 85 degree | |
| Example 1a | White | 0.3 | 1.9 | 4.2 | Visible |
| Example 1b | Carbon black 2 | 0.1 | 0.8 | 3.2 | Visible |
| Example 1c | Yellow | 0.1 | 0.6 | 2.9 | Visible |
| Example 1d | Magenta | 0.1 | 0.8 | 3.2 | Visible |
| Example 1e | Cyan | 0.1 | 0.9 | 3.6 | Visible |

It is obvious to those skilled in the art that various modifications and variations of the present invention are possible without departing from the scope of the present invention, as defined in the appended claims.

## Claims

1. A film (100) comprising a surface layer (10),
wherein the surface layer includes
a low gloss layer (20) including a binder (22) containing a urethane resin and urethane resin beads (24) having an average particle size of 4 µm to 20 µm, wherein the low gloss layer contains 100 parts by mass to 240 parts by mass of the urethane resin beads per 100 parts by mass of the binder, and
a printed pattern (30) partially covering the low gloss layer,
a region of the low gloss layer not covered with the printed pattern exhibits a matte appearance with 1.5 GU or less at 60 degrees of a surface glossiness,
a surface glossiness of a region of the printed pattern is higher than the surface glossiness of the region not covered with the printed pattern, and
the film has a visible texture.

2. The film according to claim 1, wherein the printed pattern is an ink jet printed pattern.

3. The film according to claim 1, wherein a ratio of the surface glossiness of the region of the printed pattern to the surface glossiness of the region not covered with the printed pattern of the low gloss layer is 5 or greater at 60 degrees.

4. The film according to claim 1, wherein the low gloss layer further includes nanosilica particles (26).

5. The film according to claim 4, wherein an average particle size of the nanosilica particles is 10 nm to 100 nm.

6. The film according to claim 4, wherein the low gloss layer contains 5 parts by mass to 120 parts by mass of the nanosilica particles per 100 parts by mass of the binder.

7. The film according to claim 1, wherein the surface glossiness of the region not covered with the printed pattern of the low gloss layer is 0.7 GU or less at 60 degrees.

8. The film according to claim 1, wherein the binder further contains a cellulose ester.

9. The film according to claim 1, wherein the urethane resin includes a cured product of a two-part urethane resin composition.

10. The film according to claim 1 further comprising a substrate layer.

11. The film according to claim 10, wherein the substrate layer includes a resin layer formed of at least one resin selected from the group consisting of polyvinyl chloride, polyurethane, polyethylene, polypropylene, a vinyl chloride-vinyl acetate resin, an acrylic resin, a cellulose resin, and a fluororesin.

12. The film according to claim 1, wherein the film is an interior material or an exterior material of a building or a vehicle.

## Patentansprüche

1. Eine Folie (100), aufweisend eine Oberflächenschicht (10),
wobei die Oberflächenschicht enthält
eine Schicht (20) mit geringem Glanz enthaltend ein Bindemittel (22), das ein Urethanharz und Urethanharzkügelchen (24), die eine durchschnittliche Teilchengröße von 4 µm bis 20 µm haben, beinhaltet, wobei die Schicht mit geringem Glanz 100 Masseteile bis 240 Masseteile der Urethanharzkügelchen pro 100 Masseteile des Bindemittels beinhaltet, und
ein gedrucktes Muster (30), das die Schicht mit geringem Glanz teilweise bedeckt,
ein Bereich der Schicht mit geringem Glanz, der nicht mit dem gedruckten Muster bedeckt ist, ein mattes Erscheinungsbild mit 1,5 GU oder weniger bei 60 Grad eines Oberflächenglanzes zeigt,
ein Oberflächenglanz eines Bereichs des gedruckten Musters höher als der Oberflächenglanz des Bereichs ist, der nicht mit dem gedruckten Muster bedeckt ist, und
die Folie eine sichtbare Textur hat.

2. Die Folie nach Anspruch 1, wobei das gedruckte Muster ein tintenstrahlgedrucktes Muster ist.

3. Die Folie nach Anspruch 1, wobei ein Verhältnis des Oberflächenglanzes des Bereichs des gedruckten Musters zu dem Oberflächenglanz des Bereichs, der nicht mit dem gedruckten Muster der Schicht mit geringem Glanz bedeckt ist, bei 60 Grad 5 oder mehr beträgt.

4. Die Folie nach Anspruch 1, wobei die Schicht mit geringem Glanz ferner Nanosiliciumdioxidteilchen (26) enthält.

5. Die Folie nach Anspruch 4, wobei eine durchschnittliche Teilchengröße der Nanosiliciumdioxidteilchen 10 nm bis 100 nm beträgt.

6. Die Folie nach Anspruch 4, wobei die Schicht mit geringem Glanz 5 Masseteile bis 120 Masseteile der Nanosiliciumdioxidteilchen pro 100 Masseteile des Bindemittels beinhaltet.

7. Die Folie nach Anspruch 1, wobei der Oberflächenglanz des Bereichs, der nicht mit dem gedruckten Muster der Schicht mit geringem Glanz bedeckt ist, bei 60 Grad 0,7 GU oder weniger beträgt.

8. Die Folie nach Anspruch 1, wobei das Bindemittel ferner einen Celluloseester beinhaltet.

9. Die Folie nach Anspruch 1, wobei das Urethanharz ein gehärtetes Produkt einer zweiteiligen Urethanharzzusammensetzung enthält.

10. Die Folie nach Anspruch 1, ferner aufweisend eine Substratschicht.

11. Die Folie nach Anspruch 10, wobei die Substratschicht eine Harzschicht enthält, die aus mindestens einem Harz gebildet ist, das aus der Gruppe ausgewählt ist, bestehend aus Polyvinylchlorid, Polyurethan, Polyethylen, Polypropylen, einem Vinylchlorid-Vinylacetat-Harz, einem Acrylharz, einem Celluloseharz und einem Fluorharz.

12. Die Folie nach Anspruch 1, wobei die Folie ein Innenmaterial oder ein Außenmaterial eines Gebäudes oder eines Fahrzeugs ist.

## Revendications

1. Film (100) comprenant une couche de surface (10),
dans lequel la couche de surface comporte
une couche peu brillante (20) comportant un liant (22) contenant une résine d'uréthane et des billes de résine d'uréthane (24) ayant une taille moyenne de particules de 4 µm à 20 µm, dans lequel la couche peu brillante contient 100 parties en masse à 240 parties en masse de billes de résine d'uréthane pour 100 parties en masse du liant, et
un motif imprimé (30) recouvrant partiellement la couche peu brillante,
une région de la couche peu brillante non couverte par le motif imprimé présente un aspect mat avec 1,5 GU ou moins à 60 degrés de brillance de surface,
une brillance de surface d'une région du motif imprimé est supérieure à la brillance de surface de la région non couverte par le motif imprimé, et
le film a une texture visible.

2. Film selon la revendication 1, dans lequel le motif imprimé est un motif imprimé par jet d'encre.

3. Film selon la revendication 1, dans lequel le rapport entre la brillance de la surface de la région du motif imprimé et la brillance de la surface de la région non couverte par le motif imprimé de la couche peu brillante est de 5 ou plus à 60 degrés.

4. Film selon la revendication 1, dans lequel la couche peu brillante comporte en outre des particules de nanosilice (26).

5. Film selon la revendication 4, dans lequel la taille moyenne de particule des particules de nanosilice est de 10 nm à 100 nm.

6. Film selon la revendication 4, dans lequel la couche peu brillante contient de 5 parties en masse à 120 parties en masse de particules de nanosilice pour 100 parties en masse du liant.

7. Film selon la revendication 1, dans lequel la brillance de surface de la région non couverte par le motif imprimé de la couche peu brillante est de 0,7 GU ou moins à 60 degrés.

8. Film selon la revendication 1, dans lequel le liant contient en outre un ester de cellulose.

9. Film selon la revendication 1, dans lequel la résine uréthane comporte un produit durci d'une composition de résine uréthane en deux parties.

10. Film selon la revendication 1, comprenant en outre une couche de substrat.

11. Film selon la revendication 10, dans lequel la couche de substrat comporte une couche de résine formée d'au moins une résine choisie dans le groupe constitué de polychlorure de vinyle, polyuréthane, polyéthylène, polypropylène, résine de chlorure de vinyle et d'acétate de vinyle, résine acryliques, résine de cellulose et fluororésine.

12. Film selon la revendication 1, dans lequel le film est un matériau intérieur ou extérieur d'un bâtiment ou d'un véhicule.
